# EUROPEAN PATENT SPECIFICATION

(11) **EP 3 835 165 B1**
(45) Date of publication and mention of the grant of the patent: **09.02.2022**
(21) Application number: 19020698.7
(22) Date of filing: 13.12.2019
(51) Int. Cl.: B61F 5/04, G01M 17/10

(54) **METHOD OF LEVELLING A RAIL VEHICLE**
VERFAHREN ZUM NIVELLIEREN EINES SCHIENENFAHRZEUGS
PROCÉDÉ DE MISE À NIVEAU D'UN VÉHICULE FERROVIAIRE

(43) Date of publication of application: 16.06.2021
(73) Proprietor: Bombardier Transportation GmbH, 10785 Berlin (DE)
(72) Inventor: Dowell, Adrian, Sawley, Nottingham NG10 3AE (GB); Palombo, Antonio, Derby, DE1 1SB (GB)
(74) Representative: Alatis

(56) References cited:
- CN-A- 105 857 333
- GB-A- 2 313 507
- US-A1- 2017 343 335
- US-B1- 6 314 650

## Description

### TECHNICAL FIELD OF THE INVENTION

The present invention relates to the levelling of a rail vehicle, which is the act of setting the vertical heights of a vehicle body resting on a pair of running gears. Correct levelling is vital to ensure a safe passage of the rail vehicle past fixed infrastructure or other vehicles on a parallel track, to reduce the risk of vehicle derailment and also ensure a comfortable ride for the passengers.

### BACKGROUND ART

The levelling procedure traditionally asks for the work to be performed manually on a flat and level calibrated track. The measuring process involves placing a calibrated bar, typically an aluminium bar with known thickness dimensions, across the rails under the car bolster. From the upper surface of this calibrated bar, the vertical distance to the car bolster is measured either using a steel rule or, more usually, a laser measuring device. Once the measurements have been taken, the values are added to the thickness of the calibrated bar to give the actual top-of-rail to bolster distance. Once the rail to bolster distance is known for four corner points of the car body, calculations are performed to establish the packing requirements for that car.

The process is labour intensive because it is necessary to position a long straight edge across the rail, which requires one person on each side of the vehicle to measure the vehicle heights.

Moreover, its accuracy depends on the flatness and horizontality of the calibrated track, which means that the levelling procedure can only be carried out at a specific facility. CN 105 857 333 A describes a height adjustment method for a vehicle comprising an air suspension adjustment system.

### SUMMARY OF THE INVENTION

The invention aims to provide a more accurate, less track-dependent levelling procedure.

According to a first aspect of the invention, there is provided a method of levelling a rail vehicle, the rail vehicle comprising a vehicle body supported by two running gears placed on a railway track comprising two parallel rails. The method comprises measuring height positions of at least four vehicle body reference points relative to a frame of reference stationary relative to the railway track for adjusting a secondary suspension between the vehicle body and the two running gears based on the measured height positions, the vehicle body reference points being fixed relative to the vehicle body. More specifically, the method includes the following operations:
- by means of at least one laser plane generator mounted at a stationary position relative to the railway track, projecting a rotating laser beam that rotates about a vertical rotation axis and extends in a reference plane of the frame of reference, perpendicular to the vertical rotation axis, below the vehicle body,
- by means of a set of one of more laser receivers, each measuring a height relative to the reference plane, determining vertical distances between the at least four vehicle body reference points and the reference plane and further vertical distances between a set of at least four rail height reference points and the reference plane, the rail height reference points being each located below one of the two running gears on one of the rail,
- computing adjusted height positions of the least four vehicle body reference points based on the determined vertical distances and further vertical distances and,
- comparing said adjusted height positions with expected height positions of said vehicle body reference points.

The laser plane generator provides a common reference plane, against which the potential variations of the rail height in the vicinity of the wheels of for both running gears of the rail vehicle can be measured and taken into account.

The vehicle body reference points preferably include at least one vehicle body reference point associated with each end and each side of the vehicle body, which is closer to the associated front or rear end and left or right side of the vehicle body than to the opposite end and opposite side.

The rail height reference points preferably include at least one rail height reference point associated with each running gear and each side of the vehicle body, which is closer to the associated running gear and left or right side of the vehicle body than to the opposite running gear and opposite side.

The measuring operations can be carried out simultaneously if the number of laser receivers is equal to the number of rail vehicle reference points and rail height reference points. Alternatively, they can be carried out sequentially, in which case one laser receiver can be used to measure more than one height.

The expected height positions differ from one type of rail vehicle to another and are preferably predetermined by the manufacturer.

The operations of computing the adjusted height positions and comparing them to the expected height positions are preferably carried out by a computing device, preferably provided with means of communicating with the laser receivers to receive data from the laser receivers.

In accordance with an embodiment, the reference plane is below an upper edge of the two parallel rails of the railway track and the laser beam is projected between the two parallel rails. The resulting laser beam can be approximately 10mm below the top of rail to ensure that operators in other areas of the depot are not distracted by stray laser light. Preferably, the laser plane generator is located between two vertical planes, each tangent to one of the two rails of the railway track. The laser plane generator can be located approximately at the longitudinal centre line of the track. Alternatively, and in particular if the rails are located on both sides of a servicing pit, the laser plane generator can be fixed to one of the rails.

In accordance with an embodiment, the laser plane generator is located between the running gears when the measuring operations are carried out. The laser plane generator is preferably located approximately at mid distance of the two running gears.

In accordance with an embodiment, the laser plane generator is attached to a rail or sleeper of the railway track by means of a support bracket or stand. The laser plane generator can be mounted using any robust bracket or tripod.

Preferably, the laser plane generator is a self-levelling laser plane generator, i.e. a laser plane generator with an automatic correction of the horizontality of the reference plane (or verticality of the vertical rotation axis) in the gravitational field. Such laser plane generators are known in the art, e.g. from US 6,314,650.

In accordance with a preferred embodiment, the method comprises:
- releasably attaching a set of at least four vehicle body reference brackets, each associated with one of the vehicle body reference points, to the underframe of the vehicle body so that the vehicle body reference brackets protrude towards the railway track, and
- releasably mounting a laser receiver from the set of the one or more laser receivers to each of the vehicle body reference brackets at a known distance of the associated one of the vehicle body reference points.

The vehicle body reference brackets can be specific to each type of vehicle. They enable to precisely mount the laser receiver in a known position relative to the associated vehicle body reference point and such as to cross the reference plane. The vehicle body reference brackets can be attached to the underframe of the vehicle body by magnetic means.

Similarly, the method may comprise:
- attaching a set of at least four rail height reference brackets, each associated to one of the rail height reference points, to either wheels or axle boxes of the two running gears or to rails of the railway track below the two running gears,
- mounting a laser receiver from the set of the one or more laser receivers to each of the rail height reference brackets at a known distance from the associated one of the rail height reference points.

Magnetic means can be used to attach the rail height reference brackets to the wheels or axle boxes of the two running gears or to the rails of the railway track. Each of the rail height reference brackets is preferably in contact with one of the rails, at one or more contact points below one of the two running gears.

The rail height reference points should preferably include at least one rail height reference point associated to each of the two rails and each of the two running gears. In an embodiment, each of the two running gears has one or more sets of left and right wheels and the set of rail height reference points includes left and right rail height reference points associated, respectively, to each of the left and right wheels of each of the sets of left and right wheels of each of the two running gears.

To provide additional accuracy, the levelling method may take into consideration the ageing of the secondary suspension between the vehicle body and each of the running gears and/or the ageing of the primary suspension between the frame and the axle boxes of the running gear. In accordance with an embodiment, the comparing operation includes:
- accessing a temporal model of a predetermined type of secondary suspension (or primary suspension) between each of the running gears and the vehicle body and
- accessing time data relative to a time elapsed since the vehicle body was loaded on each secondary suspension (or primary suspension),
- computing said expected height positions based on said time data and the temporal model.

This may be used for instance to reduce the nominal vehicle body height to reflect an amount of creep expected from the secondary suspension.

The method may further include the operation of adjusting the secondary suspension between the vehicle body and the two running gears.

In one embodiment, adjusting the secondary suspension involves mounting compensation packings between the secondary suspension and the vehicle body or running gears. The quantity and location of the compensation packings is then determined based on the comparison of said adjusted height positions with said expected height positions.

In accordance with one embodiment, the secondary suspension comprises pneumatic springs. In such a case, the operation of determining the vertical distances between the at least four vehicle body reference points and the reference plane can be carried out when the pneumatic suspension is inflated to adjust a neutral position of a levelling valve device for allowing air into or out of the pneumatic springs. The operation of determining the vertical distances between the at least four vehicle body reference points and the reference plane can also be carried out when the pneumatic suspension is deflated, to mount compensation packings as described hereinbefore.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is a diagrammatic side view of a rail vehicle on a railway track of a workshop;
- figure 2 is a diagrammatic top view of the vehicle of figure 1;
- figure 3 is a diagrammatic front view of the vehicle of figure 1.

### DETAILED DESCRIPTION OF PREFERRED EMBODIMENTS

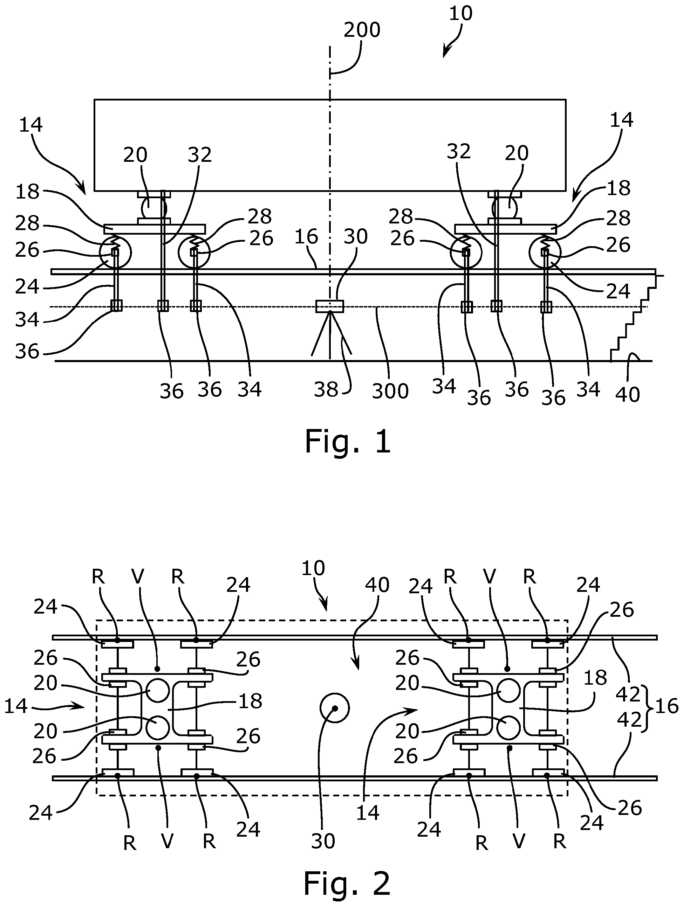

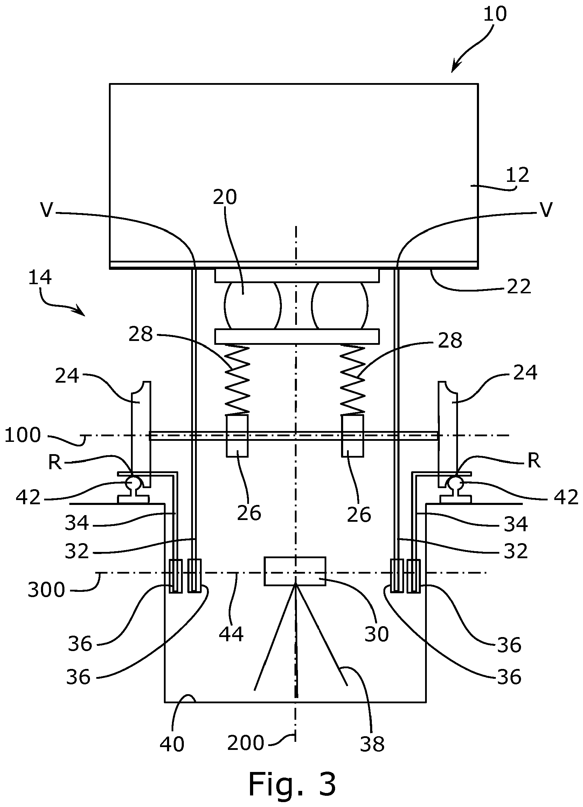

A rail vehicle **10** comprising a vehicle body **12** mounted on two running gears **14** placed on a railway track **16** at a workshop of an assembly line or maintenance facility is illustrated in figures **1** to **3****.** Each running gear **14** is depicted as a bogie with a frame **18**, a secondary suspension **20** between the frame **18** and an underframe **22** of the vehicle body **12**, two sets of left and right wheels **24**, each rotating about a revolution axis **100** defined by an associated axle box **26**, and a primary suspension **28** between each of the axle boxes **26** and the frame **18** of the running gear **14.** It should be understood, however, that the invention is equally applicable to rail vehicles with a different layout of the running gears **14**, including running gears with or without an intermediate bolster, with wheelsets or individual wheels, with a pneumatic of mechanical secondary suspension, with one or several sets of left and right wheels, or Jacobs bogies located between two adjacent vehicle bodies of an articulated rail vehicle.

In order to assess the levelling needs of the rail vehicle **10**, the railway track **16** and the rail vehicle **10** are equipped with measurement equipment, which includes: a laser plane generator **30**, a set of vehicle body reference brackets **32**, a set of rail height reference brackets **34** and one or more laser receivers **36.**

In this embodiment, the laser plane generator **30** is supported on a tripod **38** located in a pit **40** between the rails **42** of the railway track **14.** Alternatively, the laser plane generator **30** can be fixed to one of the rails **40**, between the two rails **40.** The laser plane generator is positioned such as to projects a rotating laser beam **44** that rotates about a vertical rotation axis **200** and extends in a reference plane **300** perpendicular to the vertical rotation axis **200** and fixed relative to the railway track **16.** The laser plane generator **30** is preferably fixed such that the horizontal reference plane **300** is below an upper edge of the rails **42** of the railway track **16** and the laser beam **44** is projected between the rails **42**, to contain the laser beam in the space between the rails **42** .

The laser plane generator **30** can be mounted on a bracket **42** fixed to one of the rails **40** of the track **14**, or on a stand, e.g. a tripod held on a base between the two rails **40** of the track **14.** The laser plane generator **30** is preferably located at mid-distance between the running gears **14.** The laser plane generator **30** can advantageously be provided with an inclinometer for detecting the vertical direction and with a self-levelling mechanism responsive to the inclinometer for automatically controlling the verticality of the rotation axis of the rotating laser.

The vehicle body reference brackets **30** are releasably attached, e.g. using magnets, to the underside of the underframe **22** of the vehicle body **12** at at least four predetermined locations of the underframe so as to protrude towards the railway track **16**. They are provided each with an attachment interface for attaching a laser receiver with a great accuracy, such that the vertical distance between the predetermined location of the underframe and a reference point of the laser receiver is precisely known. Each of the predetermined locations constitutes a vehicle body reference point **V.** The vehicle body reference points **V** preferably include at least one vehicle body reference point **V** associated with each end and each side of the vehicle body, which is closer to the associated front or rear end and left or right side of the vehicle body than to the opposite end and opposite side.

The rail height reference brackets **34** are releasably attached to each of the wheels **24** so as to bear against an upper edge of the associated rail **40.** Alternatively, the rail height reference brackets **34** can be directly attached to the rails **40**, in the direct vicinity of the wheels **24**, below the two running gears **14.** The contact interface between each rail height reference bracket **34** and the associated rail **40** defines a rail height reference point of the rail **40**, at the upper edge of the rail **40** in the vicinity of the contact zone between the rail **40** and the wheel **24.** The rail height reference brackets **34** are provided each with an attachment interface for attaching a laser receiver **36** with a great accuracy, such that the vertical distance between the rail height reference point **R** and a reference point of the laser receiver **36** is precisely known.

A laser receiver is a device provided with a narrow laser reception window which, when placed vertically and directed towards a laser, is capable of precisely detecting the position of the laser within the laser reception window and hence of measuring the vertical position of a reference point of the laser receiver relative to the laser. The vehicle body reference brackets **32** and rail height reference brackets **34** have dimensions such that the laser reception window of the associated laser receiver **36** is vertical and crosses the reference plane **300.**

With the vehicle body reference brackets **32** and rail height reference brackets **34** in place and the laser plane generator **30** running, it is possible, for each reference bracket **32**, **34**, to measure the relative vertical distance of the associated laser receiver **36** relative to the reference plane **300** and to compute the distance of each vehicle body reference point **V** and each rail height reference point **R** to the reference plane **300.**

This can be done simultaneously for all reference points **V**, **R** if all reference brackets **32**, **34** are simultaneously equipped with a laser receiver **36**, or sequentially if one of the laser receivers **36** is used with more than one of the reference brackets **32**, **34.**

The measured vertical distance values are transmitted to a calculation unit which determines four track offset values, each associated with one of the running gears **14** and one of the rails **40.** Each track offset value is the average of the two rail height reference values of the two wheels **40** of the associated running gear **14** on the associated rail **40.**

Once the offset values have been determined, they are applied to the vertical distances between the vehicle body reference points **V** and the reference plane **300.** More specifically, the offset value of a given running gear **14** and rail **40** is subtracted from the vertical distance of the vehicle body reference point **V** that is closest to said running gear **14** and rail **40**, to determine an adjusted height of the vehicle body reference point **V.** The adjusted heights are representative of the heights of the vehicle body reference points **V** on an ideal horizontal track.

These adjusted heights are then compared with expected values prescribed by the manufacturer of the rail vehicle and, where a significant difference is identified, packings are added to the secondary suspension. The thickness of the added packing is given by the difference between the expected value and the corresponding adjusted height.

In order to take the ageing of the primary and secondary suspension into consideration, e.g. the variations of a standard spring deflection over time, the expected values of the heights of the vehicle body reference points prescribed by the manufacturer can vary as a function of the time elapsed since the vehicle body was loaded on the secondary suspension, and the time elapsed since the vehicle body was loaded on the primary suspension. To this end, an operator enters into the calculation unit the relevant time data for each running gear and each side of the vehicle.

The invention is not limited to this embodiment.

Instead of using and averaging two height reference points **R** for each running gear side, only one height reference point **R** and one height reference bracket can be used.

The number of vehicle height reference points **V** and reference brackets **32** can exceed four to increase accuracy.

If the secondary suspension is pneumatic, the procedure is preferably carried out first when the air springs of the pneumatic suspensions are deflated, to add packing where necessary as described above, and subsequently when they are inflated, to adjust the neutral position levelling valve of the air springs, according to prescriptions of manufacturer. The invention, however, is not limited to pneumatic suspensions.

## Claims

1. A method of levelling a rail vehicle (10), the rail vehicle (10) comprising a vehicle body (12) supported by two running gears (14) placed on a railway track (16) comprising two parallel rails (40), the method comprising measuring height positions of at least four vehicle body reference points (V) relative to a frame of reference stationary relative to the railway track (16) for adjusting a secondary suspension (20) between the vehicle body (12) and the two running gears (14) based on the measured height positions, the vehicle body reference points (V) being fixed relative to the vehicle body (12), the method being **characterised in that** it includes the following operations:
- by means of at least one laser plane generator (30) mounted at a stationary position relative to the railway track (16), projecting a rotating laser beam (44) that rotates about a vertical rotation axis (200) and extends below the vehicle body (12) in a reference plane (300) of the frame of reference perpendicular to the vertical rotation axis (200),
- by means of a set of one of more laser receivers (36), each measuring a height relative to the reference plane (300), determining vertical distances between the at least four vehicle body reference points (V) and the reference plane (300) and further vertical distances between a set of at least four rail height reference points (R) and the reference plane (300), the rail height reference points (R) being each located below one of the two running gears (14) on one of the rails (40),
- computing adjusted height positions of the least four vehicle body reference points (V) based on the determined vertical distances and further vertical distances and,
- comparing said adjusted height positions with expected height positions of said vehicle body reference points (V).

2. The method of claim 1, wherein the reference plane (300) is below an upper edge of the two parallel rails (40) of the railway track (16) and the laser beam (38) is projected between the two parallel rails (40) of the railway track (16).

3. The method of any one of the preceding claims, wherein the laser plane generator (30) is located between two vertical planes, each tangent to one of the two rails (40) of the railway track (16).

4. The method of any one of the preceding claims, wherein the laser plane generator (30) is located between the running gears (14) when the measuring operations are carried out.

5. The method of any one of the preceding claims, wherein the laser plane generator (30) is attached to a rail (40) or sleeper of the railway track (16) or to a fixed surface (40) by means of a support bracket or stand (38).

6. The method of any one of the preceding claims, wherein the laser plane generator (30) is a self-levelling laser plane generator.

7. The method of any one of the preceding claims, comprising
- releasably attaching a set of at least four vehicle body reference brackets (32), each associated to one of the vehicle body reference points (V), to an underframe (22) of the vehicle body (12) so that the vehicle body reference brackets (32) protrude towards the railway track (14), and
- releasably mounting a laser receiver (36) from the set of the one or more laser receivers (36) to each of the vehicle body reference brackets (32) at a known distance of the associated one of the vehicle body reference points (V).

8. The method of any one of preceding claims, comprising
- attaching a set of at least four rail height reference brackets (34), each associated to one of the rail height reference points (R), to either wheels (24) or axle boxes (26) of the two running gears (14) or to the rails (40) of the railway track (16) below the two running gears (14),
- mounting a laser receiver (36) from the set of the one or more laser receivers (36) to each of the rail height reference brackets (34) at a known distance from the associated one of the rail height reference points (R).

9. The method of claim 8, wherein each of the rail height reference brackets (34) is in contact with one of the rails (40), at one or more contact points below one of the two running gears (14).

10. The method of any one of the preceding claims, wherein each of the two running gears (14) has one or more sets of left and right wheels (24) and the set of rail height reference points includes left and right rail height reference points (R) associated, respectively, to each of the left and right wheels (24) of each of the sets of left and right wheels of each of the two running gears (14).

11. The method of any one of the preceding claims, wherein said comparing operation includes:
- accessing a temporal model of a predetermined type of secondary suspension (20) between each of the running gears (16) and the vehicle body (12) and
- accessing time data relative to a time elapsed since the vehicle body (12) was loaded on the secondary suspension (20),
- computing said expected height positions based on said time data and the temporal model.

12. The method of any one of the preceding claims, further including an operation of adjusting the secondary suspension (20) between the vehicle body (12) and the two running gears (14).

13. The method of claim 12, wherein adjusting the secondary suspension (20) between the vehicle body (12) and the two running gears (14) includes mounting compensation packings between the secondary suspension (20) and the vehicle body (12) or running gears (14), wherein a quantity and location of the compensation packings are determined based on the comparison of said adjusted height positions with said expected height positions.

14. The method of any one of the claims 12 to 13, wherein the secondary suspension (20) comprises pneumatic springs, and the operation of determining the vertical distances between the at least four vehicle body reference points (V) and the reference plane (300) is carried out at least when the pneumatic springs are inflated and the operation of adjusting the secondary suspension (20) between the vehicle body (12) and the two running gears (14) includes adjusting a neutral position of a levelling valve device for allowing air into or out of the pneumatic springs.

15. The method of any one of claims 12 to 13, wherein the secondary suspension (20) comprises pneumatic springs, and the operation of determining the vertical distances between the at least four vehicle body reference points (V) and the reference plane (200) is carried out at least when the pneumatic springs are deflated.

## Patentansprüche

1. Verfahren zum Nivellieren eines Schienenfahrzeugs (10), wobei das Schienenfahrzeug (10) einen Fahrzeugkasten (12) umfasst, der durch zwei Laufwerke (14) getragen wird, die auf einem Gleis (16) angeordnet sind, das zwei parallele Schienen (40) umfasst, wobei das Verfahren ein Messen von Höhenpositionen von wenigstens vier Fahrzeugkastenreferenzpunkten (V) in Bezug auf einen Referenzrahmen stationär in Bezug auf das Gleis (16) zum Einstellen einer Sekundärfederung (20) zwischen dem Fahrzeugkasten (12) und den zwei Laufwerken (14) basierend auf den gemessenen Höhenpositionen umfasst, wobei die Fahrzeugkastenreferenzpunkte (V) in Bezug auf den Fahrzeugkasten (12) fixiert sind, wobei das Verfahren **dadurch gekennzeichnet ist, dass** es die folgenden Abläufe beinhaltet:
- mittels wenigstens eines Laserebenengenerators (30), der in Bezug auf das Gleis (16) an einer stationären Position montiert ist, Projizieren eines rotierenden Laserstrahls (44), der um eine vertikale Rotationsachse (200) herum rotiert und sich unterhalb des Fahrzeugkastens (12) in einer Referenzebene (300) des Referenzrahmens senkrecht zur vertikalen Rotationsachse (200) erstreckt,
- mittels eines Satzes von einem oder mehreren Laserempfängern (36), die jeweils eine Höhe in Bezug auf die Referenzebene (300) messen, Bestimmen vertikaler Abstände zwischen den wenigstens vier Fahrzeugkastenreferenzpunkten (V) und der Referenzebene (300) und weiterer vertikaler Abstände zwischen einem Satz von wenigstens vier Schienenhöhenreferenzpunkten (R) und der Referenzebene (300), wobei sich die Schienenhöhenreferenzpunkte (R) jeweils unterhalb eines der zwei Laufwerke (14) auf einem der Gleise (40) befinden,
- Berechnen eingestellter Höhenpositionen der wenigstens vier Fahrzeugkastenreferenzpunkte (V) basierend auf den bestimmten vertikalen Abständen und weiteren vertikalen Abständen und,
- Vergleichen der eingestellten Höhenpositionen mit erwarteten Höhenpositionen der Fahrzeugkastenreferenzpunkte (V).

2. Verfahren nach Anspruch 1, wobei die Referenzebene (300) unterhalb einer oberen Kante der zwei parallelen Schienen (40) des Gleises (16) liegt und der Laserstrahl (38) zwischen die zwei parallelen Schienen (40) des Gleises (16) projiziert wird.

3. Verfahren nach einem der vorhergehenden Ansprüche, wobei sich der Laserebenengenerator (30) zwischen zwei vertikalen Ebenen befindet, wobei jede zu einer der zwei Schienen (40) des Gleises (16) tangential ist.

4. Verfahren nach einem der vorhergehenden Ansprüche, wobei sich der Laserebenengenerator (30) zwischen den Laufwerken (14) befindet, wenn die Messabläufe ausgeführt werden.

5. Verfahren nach einem der vorhergehenden Ansprüche, wobei der Laserebenengenerator (30) an einer Schiene (40) oder Schwelle des Gleises (16) oder an einer fixierten Oberfläche (40) mittels einer Traghalterung oder einem Tragständer (38) befestigt ist.

6. Verfahren nach einem der vorhergehenden Ansprüche, wobei der Laserebenengenerator (30) ein selbstnivellierender Laserebenengenerator ist.

7. Verfahren nach einem der vorhergehenden Ansprüche, das Folgendes umfasst
- lösbares Befestigen eines Satzes von wenigstens vier Fahrzeugkastenreferenzhalterungen (32), die jeweils einem der Fahrzeugkastenreferenzpunkte (V) zugeordnet sind, an einem Unterrahmen (22) des Fahrzeugkastens (12), so dass die Fahrzeugkastenreferenzhalterungen (32) in Richtung des Gleises (14) vorstehen, und
- lösbares Montieren eines Laserempfängers (36) aus dem Satz des einen oder der mehreren Laserempfänger (36) an jeder der Fahrzeugkastenreferenzhalterungen (32) in einem bekannten Abstand von dem zugeordneten der Fahrzeugkastenreferenzpunkte (V).

8. Verfahren nach einem der vorhergehenden Ansprüche, das Folgendes umfasst
- Befestigen eines Satzes von wenigstens vier Schienenhöhenreferenzhalterungen (34), die jeweils einem der Schienenhöhenreferenzpunkte (R) zugeordnet sind, entweder an Rädern (24) oder Achslagern (26) der zwei Laufwerke (14) oder an den Schienen (40) des Gleises (16) unterhalb der zwei Laufwerke (14),
- Montieren eines Laserempfängers (36) aus dem Satz des einen oder der mehreren Laserempfänger (36) an jeder der Schienenhöhenreferenzhalterungen (34) in einem bekannten Abstand zu dem zugeordneten der Schienenhöhenreferenzpunkte (R).

9. Verfahren nach Anspruch 8, wobei jede der Schienenhöhenreferenzhalterungen (34) mit einer der Schienen (40) an einem oder mehreren Berührungspunkten unterhalb einem der zwei Laufwerke (14) in Berührung steht.

10. Verfahren nach einem der vorhergehenden Ansprüche, wobei jedes der zwei Laufwerke (14) einen oder mehrere Sätze linker und rechter Räder (24) aufweist und der Satz von Schienenhöhenreferenzpunkten linke und rechte Schienenhöhereferenzpunkte (R) beinhaltet, die jeweils jedem der linken und der rechten Räder (24) jedes der Sätze von linken und rechten Rädern jedes der zwei Laufwerke (14) zugeordnet sind.

11. Verfahren nach einem der vorhergehenden Ansprüche, wobei der Vergleichsablauf Folgendes beinhaltet:
- Zugreifen auf ein Zeitmodell einer zuvor bestimmten Art von Sekundärfederung (20) zwischen jedem der Laufwerke (16) und dem Fahrzeugkasten (12) und
- Zugreifen auf Zeitdaten in Bezug zu einer Zeit, die verstrichen ist, seit der Fahrzeugkasten (12) auf die Sekundärfederung (20) geladen wurde,
- Berechnen der erwarteten Höhenpositionen basierend auf den Zeitdaten und dem Zeitmodell.

12. Verfahren nach einem der vorhergehenden Ansprüche, das ferner einen Ablauf zum Einstellen der Sekundärfederung (20) zwischen dem Fahrzeugkasten (12) und den zwei Laufwerken (14) beinhaltet.

13. Verfahren nach Anspruch 12, wobei das Einstellen der Sekundärfederung (20) zwischen dem Fahrzeugkasten (12) und den zwei Laufwerken (14) das Montieren von Ausgleichsabstandselementen zwischen der Sekundärfederung (20) und dem Fahrzeugkasten (12) oder den Laufwerken (14) beinhaltet, wobei eine Menge und ein Ort der Ausgleichsabstandselemente basierend auf dem Vergleich der eingestellten Höhenpositionen mit den erwarteten Höhenpositionen bestimmt werden.

14. Verfahren nach einem der Ansprüche 12 bis 13, wobei die Sekundärfederung (20) Luftfedern umfasst und der Ablauf des Bestimmens der vertikalen Abstände zwischen den wenigstens vier Fahrzeugkastenreferenzpunkten (V) und der Referenzebene (300) wenigstens dann ausgeführt wird, wenn die Luftfedern aufgepumpt sind und der Ablauf des Einstellens der Sekundärfederung (20) zwischen dem Fahrzeugkasten (12) und den zwei Laufwerken (14) das Einstellen einer Neutralposition einer Nivellierungsventilvorrichtung zum Durchlassen von Luft in die oder aus den Luftfedern beinhaltet.

15. Verfahren nach einem der Ansprüche 12 bis 13, wobei die Sekundärfederung (20) Luftfedern umfasst und der Ablauf des Bestimmens der vertikalen Abstände zwischen den wenigstens vier Fahrzeugkastenreferenzpunkten (V) und der Referenzebene (200) wenigstens dann ausgeführt wird, wenn die Luftfedern entleert sind.

## Revendications

1. Procédé de nivellement d'un véhicule ferroviaire (10), le véhicule ferroviaire (10) comprenant une caisse de véhicule (12) supportée par deux trains de roulement (14) placés sur une voie ferrée (16) comprenant deux rails parallèles (40), le procédé comprenant la mesure des positions en hauteur d'au moins quatre points de référence de caisse de véhicule (V) par rapport à un référentiel stationnaire par rapport à la voie ferrée (16) destinée à régler une suspension secondaire (20) entre la caisse de véhicule (12) et les deux trains de roulement (14) sur la base des positions de hauteur mesurées, les points de référence de caisse de véhicule (V) étant fixes par rapport à la caisse de véhicule (12), le procédé étant **caractérisé en ce qu'**il comporte les opérations suivantes :
- au moyen d'au moins un générateur de plan laser (30) monté en position immobile par rapport à la voie ferrée (16), la projection d'un faisceau laser rotatif (44) qui tourne autour d'un axe de rotation vertical (200) et s'étend en dessous de la caisse de véhicule (12) dans un plan de référence (300) du référentiel perpendiculaire à l'axe de rotation vertical (200),
- au moyen d'un ensemble d'un ou de plusieurs récepteurs laser (36), mesurant chacun une hauteur par rapport au plan de référence (300), la détermination des distances verticales entre les au moins quatre points de référence de caisse de véhicule (V) et le plan de référence (300) et d'autres distances verticales entre un ensemble d'au moins quatre points de référence de hauteur de rail (R) et le plan de référence (300), les points de référence de hauteur de rail (R) étant chacun situés en dessous de l'un des deux trains de roulement (14) sur l'un des rails (40),
- le calcul de positions de hauteur ajustées des au moins quatre points de référence de la caisse de véhicule (V) sur la base des distances verticales déterminées et d'autres distances verticales et,
- la comparaison desdites positions de hauteur ajustées avec des positions de hauteur attendues desdits points de référence de caisse de véhicule (V).

2. Procédé selon la revendication 1, dans lequel le plan de référence (300) est en dessous d'un bord supérieur des deux rails parallèles (40) de la voie ferrée (16) et le faisceau laser (38) est projeté entre les deux rails parallèles (40) de la voie ferrée (16).

3. Procédé selon l'une quelconque des revendications précédentes, dans lequel le générateur de plan laser (30) est situé entre deux plans verticaux, chacun tangent à l'un des deux rails (40) de la voie ferrée (16).

4. Procédé selon l'une quelconque des revendications précédentes, dans lequel le générateur de plan laser (30) est situé entre les trains de roulement (14) lorsque les opérations de mesure sont effectuées.

5. Procédé selon l'une quelconque des revendications précédentes, dans lequel le générateur de plan laser (30) est fixé à un rail (40) ou à une traverse de la voie ferrée (16) ou à une surface fixe (40) au moyen d'un palier de support ou d'une base (38).

6. Procédé selon l'une quelconque des revendications précédentes, dans lequel le générateur de plan laser (30) est un générateur de plan laser à nivellement automatique.

7. Procédé selon l'une quelconque des revendications précédentes, comprenant
- la fixation de manière amovible d'un ensemble d'au moins quatre supports de référence de caisse de véhicule (32), chacun associé à l'un des points de référence de caisse de véhicule (V), à un châssis (22) de la caisse de véhicule (12) de sorte que les supports de référence de caisse de véhicule (32) font saillie vers la voie ferrée (14), et
- le montage de manière amovible d'un récepteur laser (36) à partir de l'ensemble du ou des récepteurs laser (36) sur chacun des supports de référence de caisse de véhicule (32) à une distance connue du point de référence de caisse de véhicule associé parmi les points de référence de caisse de véhicule (V).

8. Procédé selon l'une quelconque des revendications précédentes, comprenant
- la fixation d'un ensemble d'au moins quatre supports de référence de hauteur de rail (34), chacun associé à l'un des points de référence de hauteur de rail (R), soit à des roues (24) soit à des boîtes d'essieu (26) des deux trains de roulement (14) ou aux rails (40) de la voie ferrée (16) en dessous des deux trains de roulement (14),
- le montage d'un récepteur laser (36) à partir de l'ensemble du ou des récepteurs laser (36) sur chacun des supports de référence de hauteur de rail (34) à une distance connue du point de référence de hauteur de rail associé parmi les points de référence de hauteur de rail (R).

9. Procédé selon la revendication 8, dans lequel chacun des supports de référence de hauteur de rail (34) est en contact avec l'un des rails (40), en un ou plusieurs points de contact sous l'un des deux trains de roulement (14).

10. Procédé selon l'une quelconque des revendications précédentes, dans lequel chacun des deux trains de roulement (14) présente un ou plusieurs ensembles de roues gauche et droite (24) et l'ensemble de points de référence de hauteur de rail comporte des points de référence de hauteur de rail gauche et droit (R) associés, respectivement, à chacune des roues gauche et droite (24) de chacun des ensembles de roues gauche et droite de chacun des deux trains de roulement (14).

11. Procédé selon l'une quelconque des revendications précédentes, dans lequel ladite opération de comparaison comporte :
- l'accès à un modèle temporel d'un type prédéterminé de suspension secondaire (20) entre chacun des trains de roulement (16) et la caisse de véhicule (12) et
- l'accès à des données temporelles relatives à un temps écoulé depuis que la caisse de véhicule (12) a été chargée sur la suspension secondaire (20),
- le calcul desdites positions de hauteur attendues sur la base desdites données temporelles et du modèle temporel.

12. Procédé selon l'une quelconque des revendications précédentes, comportant en outre une opération de réglage de la suspension secondaire (20) entre la caisse de véhicule (12) et les deux trains de roulement (14).

13. Procédé selon la revendication 12, dans lequel le réglage de la suspension secondaire (20) entre la caisse de véhicule (12) et les deux trains de roulement (14) comporte le montage de garnitures de compensation entre la suspension secondaire (20) et la caisse de véhicule (12) ou les trains de roulement (14), dans lequel une quantité et un emplacement des garnitures de compensation sont déterminés sur la base de la comparaison desdites positions de hauteur ajustées avec lesdites positions de hauteur attendues.

14. Procédé selon l'une quelconque des revendications 12 à 13, dans lequel la suspension secondaire (20) comprend des ressorts pneumatiques, et l'opération de détermination des distances verticales entre les au moins quatre points de référence de caisse de véhicule (V) et le plan de référence (300) est effectuée au moins lorsque les ressorts pneumatiques sont gonflés et l'opération de réglage de la suspension secondaire (20) entre la caisse de véhicule (12) et les deux trains de roulement (14) comporte le réglage d'une position neutre d'un dispositif de soupape de nivellement pour laisser passer l'air dans ou hors des ressorts pneumatiques.

15. Procédé selon l'une quelconque des revendications 12 à 13, dans lequel la suspension secondaire (20) comprend des ressorts pneumatiques, et l'opération de détermination des distances verticales entre les au moins quatre points de référence de caisse de véhicule (V) et le plan de référence (200) est effectuée au moins lorsque les ressorts pneumatiques sont dégonflés.
